Europäisches Patentamt

European Patent Office

Office européen des brevets

(19)

(11) **EP 1 452 562 A1**

(12) **EUROPEAN PATENT APPLICATION**
published in accordance with Art. 158(3) EPC

(43) Date of publication:
   **01.09.2004 Bulletin 2004/36**

(51) Int Cl.⁷: **C08L 59/00**, C08L 27/12,
   C08J 5/00

(21) Application number: **02785943.8**

(22) Date of filing: **21.11.2002**

(86) International application number:
   **PCT/JP2002/012147**

(87) International publication number:
   **WO 2003/044088 (30.05.2003 Gazette 2003/22)**

(84) Designated Contracting States:
   **AT BE BG CH CY CZ DE DK EE ES FI FR GB GR
   IE IT LI LU MC NL PT SE SK TR**

(30) Priority: **21.11.2001 US 989160**

(71) Applicant: **Daikin Industries, Ltd.**
   **Osaka-shi, Osaka 530-8323 (JP)**

(72) Inventors:
   • **KUBO, Katsuyoshi**
     **Rye, NY 10580 (US)**
   • **OTSUKA, Takahide**
     **Yardley, PA 19067 (US)**
   • **OKA, Masahiko**
     **Mahwah, NJ 07430 (US)**
   • **MIYAMORI, Tsuyoshi**
     **c/o DAIKIN INDUSTRIES, LTD.**
     **Settsu-shi, Osaka566-8585 (JP)**

(74) Representative: **HOFFMANN - EITLE**
   **Patent- und Rechtsanwälte**
   **Arabellastrasse 4**
   **81925 München (DE)**

(54) **LOW-TEMPERATURE-DECOMPOSABLE ENGINEERING PLASTIC RESIN COMPOSITION AND PROCESS FOR PRODUCING MOLDED OBJECT OF THE COMPOSITION**

(57) The present invention is a low-temperature-decomposable engineering plastic resin composition prepared by formulating a low-temperature-decomposable engineering plastic with a fluorine-containing resin, wherein said low-temperature-decomposable engineering plastic has a melting point of not higher than 200°C and a decomposition temperature of not higher than 300°C, and wherein said fluorine-containing resin is a resin comprising a fluorine-containing polymer, said fluorine-containing polymer having a fluorine atom and at least one atom species selected from the group consisting of hydrogen atom, chlorine atom, bromine atom and iodine atom, said fluorine atom and said at least one atom species being bound to a non-terminal carbon atom constituting a main chain, and said fluorine-containing polymer having substantially no polar functional groups reactive to the low-temperature-decomposable engineering plastic.

**Description**

CROSS REFERENCE TO RELATED APPLICATIONS

This application is a continuation-in-part of U.S. Application No. 09/989,160 filed November 21, 2001, the disclosure of which is incorporated herein by reference.

FIELD OF THE INVENTION

The present invention relates to a low-temperature-decomposable engineering plastic resin composition conducive to improved molding processability of low-temperature-decomposable engineering plastics, and to a method of producing low-temperature-decomposable engineering plastic shaped articles using the low-temperature-decomposable engineering plastic resin composition.

BACKGROUND ART

A moldable polymer is generally formed into a shaped article by melting at an elevated temperature in an extruder, molding the resulting melt by means of a metal mold or die, and cooling the melt. The molding technology includes but is not limited to extrusion molding, in which the molten material is transported by a revolving screw within the barrel of an extruder to a die for molding.

In such polymer molding, the extrusion pressure and extrusion torque usually increase with an increase in friction between the molten material and the die for polymers having the same melt-fluidity. An excessively high extrusion pressure or extrusion torque overloads the extruder and may cause problems in commercial production, such as an automatic stop of the extruder.

Furthermore, in polymer molding, if the extrusion pressure or extrusion torque is not constant but changes unexpectedly, problems will be encountered in that the resulting shaped article tends to be defective in surface smoothness or gloss, for instance. The result is that it becomes difficult to supply products of consistently acceptable quality, or product yield and productivity are sacrificed.

For the purpose of improving polymer molding processability, there have been proposals to add a processing aid to the polymer. As such a processing aid, a fluorine-containing polymer in low concentration is known to be useful in alleviating adverse events such as the incidence of melt fracture or high torque which limits the polymer extrusion speed.

U.S. Patent 5,010,130 describes an auxiliary agent-blended resin composition comprising, as a main component, a hardly melt-moldable resin and, as another component, polytetrafluoroethylene (PTFE) having a viscosity of 400 Pa.s at 200°C, or a tetrafluoroethylene (TFE) copolymer melting at a molding temperature in the case of a crystalline resin or having a Tg not less than the molding temperature in the case of a non-crystalline resin. However, this technology is directed to resins which can be hardly melt-molded, and the fluororesin is said to be a resin having a melting point not higher than the melting point of the main resin.

U.S. Patent 3,125,547 discloses the use of a small quantity of a fluorocarbon polymer as a continuous-feed slip agent in the extrusion molding of a hydrocarbon polymer such as low-density polyethylene (LDPE), and comments that the fluororesin which is solid at the processing temperature does little or nothing to improve the extrusion characteristics of hydrocarbon polymers.

U.S. Patent 4,855,360 discloses a thermoplastic olefin resin composition comprising a poly(oxyalkoxy)olefin for improving flow on the die surface to reduce melting defects in the extrudate. A fluororesin is incorporated in a weight ratio of 1/1 to 1/10 relative thereto, or in a proportion of 0.005 to 0.2 wt. % relative to the polyolefin resin composition.

U.S. Patent 4,904,735 discloses a technology in which a fluororesin which is molten in the case of a crystalline resin or exceeds Tg in the case of a non-crystalline resin at a molding temperature is incorporated into a hardly melt-moldable resin comprising at least one monoolefin resin such as LDPE.

U.S. Patent 5,266,639 discloses a technique of using a TFE/hexafluoropropylene (HFP) copolymer (FEP) having a specific infrared ratio (HFP index) of 6.4 to 9.0 and a melt viscosity of $0.1 \times 10^3$ to $10 \times 10^3$ poise as a polyolefin-molding aid for preventing melt fracture and retrenching the molding start time.

U.S. Patent 5,464,904 discloses a technique of blending a polyolefin resin with a fluororesin having a hydrogen atom content of not more than 2 wt %, a melt viscosity of $0.1 \times 10^3$ to $10 \times 10^3$ poise, and a melting end temperature (Tm) of 170 to 265°C.

U.S. Patent 5,547,761 discloses a technique of coating a polyolefin with an FEP having an HFP index of 6.4 to 9.0 and a Tm value of 180 to 255°C.

U.S. Patent 5,707,569 discloses a technique of formulating a fluororesin in the process for extrusion-molding a polyolefin composition comprising a bivalent or trivalent metal ion and an organic or inorganic anion for the purpose of eliminating the effect of $Ca^{2+}$.

However, these techniques are only relevant to polyolefin polymers obtained by vinyl polymerization, such as polyethylene, polypropylene or the like, and none of the literature teaches a technique using a fluorine-containing polymer for the purpose of improving the molding processability of engineering plastics such as polyamides and polyetheretherketones.

U.S. Patent 5,132,368 discloses a composition including a hardly melt-processable polymer and, based on the polymer, 0.002 to 0.5 wt % of a fluoropolymer processing aid, citing a formulation comprising nylon 66 and FEP or irradiated PTFE as an example. However, this fluoropolymer has at least 100 units of a specified polar functional group, such as ionic groups, e.g., -COOH and -$SO_3H$, and/or -COF or the like, per $10^6$ carbon atoms at the chain terminus. This patent publication comments that the processing aid is bound to the metal or metal oxide die surface chemically or physically to reduce the resistance to flow of the polymer melt on the die surface, that this additive no longer functions as an effective processing aid when the polar terminal groups become nonexistent by a treatment such as moist heat treatment, and that the die pressure and variation thereof cannot be decreased at this fluoropolymer concentration. Therefore, this technique is different from the present invention with respect to the characteristics of fluorine-containing polymer and the effect of the invention. This technique allows a slip layer to persist on the metal or the like by virtue of the polar functional groups over an extended period of the molding process, while the reactivity to the hardly melt-processable polymer is also increased to cause added friction so that the extrusion pressure cannot be sufficiently depressed.

U.S. Patent 6, 380, 313 discloses, as a processing aid for a thermoplastic resin such as LDPE, the use of a fluororesin comprising a perfluoro(vinyl ether) unit. However, there is no description relating to a low-temperature-decomposable engineering plastics such as polyacetal as the hardly melt-processable polymer or no description that the fluororesin has the polar functional groups.

SUMMARY OF THE INVENTION

It is therefore an object of the present invention to provide a resin composition which, in the molding of meltable low-temperature-decomposable engineering plastics, as distinguished from the hardly melt-moldable resins or polyolefin resins treated in the above prior art patent publications, is conducive to improved molding processability in consideration of extrusion pressure, extrusion torque and other process parameters, and which further insures stable molding processability in consideration of extrusion pressure, extrusion torque and the like.

The present invention is directed to a low-temperature-decomposable engineering plastic resin composition prepared by formulating a low-temperature-decomposable engineering plastic with a fluorine-containing resin, wherein said low-temperature-decomposable engineering plastic has a melting point of not higher than 200°C and a decomposition temperature of not higher than 300°C, and wherein said fluorine-containing resin is a resin comprising a fluorine-containing polymer, said fluorine-containing polymer having a fluorine atom and at least one atom species selected from the group consisting of hydrogen atom, chlorine atom, bromine atom and iodine atom, said fluorine atom and said at least one atom species being bound to a non-terminal carbon atom constituting a main chain, and said fluorine-containing polymer having substantially no polar functional groups reactive to the low-temperature-decomposable engineering plastic.

The present invention is a method of producing the low-temperature-decomposable engineering plastic resin composition, which comprises producing the low-temperature-decomposable engineering plastic resin composition by formulating the low-temperature-decomposable engineering plastic with the fluorine-containing resin.

The present invention is a method of producing a low-temperature-decomposable engineering plastic shaped article, which comprises producing the shaped article by melting and molding the above low-temperature-decomposable engineering plastic resin composition.

The present invention is now described in further detail below.

DETAILED DESCRIPTION OF THE INVENTION

The low-temperature-decomposable resin composition of the invention is prepared by formulating a low-temperature-decomposable engineering plastic with a fluorine-containing resin.

The above fluorine-containing resin is a resin comprising a fluorine-containing polymer which has a fluorine atom and at least one atom species selected from the group consisting of hydrogen atom, chlorine atom, bromine atom and iodine atom, the above fluorine atom and the above at least one atom species being bound to a non-terminal carbon atom constituting a main chain. In this specification, the above "non-terminal carbon atom" is, among carbon atoms constituting the main chain of the fluorine-containing polymer, the one different from carbon atoms located at termini. Such fluorine-containing resin generally has a low melting point and can suitably be used as a processing aid for the low-temperature-decomposable engineering plastics. The above fluorine-containing polymer, provided that it has a fluorine atom and at least one atom species selected from the group consisting of a hydrogen atom, chlorine atom, bromine atom and iodine atom, the above fluorine atom and the above at least one atom species being bound to the non-terminal carbon atom constituting the main chain, may have atom species bound to a non-terminal carbon atom constituting the main chain, such as oxygen atom, nitrogen atom, silicon atom, sulfur atom, other than those mentioned above. The above oxygen atom is usually an ether oxygen.

The fluorine-containing polymers include polymers obtainable by polymerizing, as a monomer component, one or more than one fluorine-containing monomers, for example perfluoromonomers such as tetrafluoroethylene (TFE), hexafluoropropylene (HFP), perfluoro(vinyl ether) (PFVE); chlorofluorovinyl monomers, e.g., chlorotrifluoro-ethylene (CTFE); fluorine-containing vinyl monomers other than those mentioned above, e.g., vinylidene fluoride (VdF), vinyl fluoride, trifluoroethylene, a monomer represented by the following general formula (i):

$$CH_2=CX^1(CF_2)_nX^2 \tag{i}$$

(in the formula, $X^1$ represents a hydrogen atom or a fluorine atom, $X^2$ represents a hydrogen atom, a fluorine atom or a chlorine atom and n represents an integer of 1 to 10.) and the like. The above PFVE includes, for example, perfluoro (alkyl vinyl ether) (PAVE) and the like. The above monomer component may further contain one or more non-fluorine-containing vinyl monomers such as ethylene (Et), propylene (Pr), or the like. The above fluorine-containing polymer is obtainable by polymerizing the above-mentioned monomers and, as mentioned above, it is needless to say that it has a fluorine atom and at least one atom species selected from the group consisting of hydrogen atom, chlorine atom, bromine atom and iodine atom, the above fluorine atom and the above at least one atom species being bound to a non-terminal carbon atom constituting a main chain.

The perfluoromonomer mentioned above is a monomer having a main chain composed of carbon atom and fluorine atom and, in some cases, oxygen atom as well, with no hydrogen atom bound to the main chain carbon atom, thus including perfluorovinyl monomers such as TFE, HFP, etc., and also inclusive of PAVE monomers such as perfluoro (propyl vinyl ether) (PPVE). The oxygen atom is usually ether oxygen.

The fluorine-containing polymer further includes VdF series polymers containing VdF as a monomer component, such as poly(vinylidene fluoride) (PVdF), TFE/HFP/VdF copolymer (THV) , VdF/TFE copolymer (VT), VdF/HFP copolymer (VdF/HFP), VdF/TFE/HFP copolymer (VdF/TFE/HFP).

The fluorine-containing polymer further includes TFE series polymers such as Et/TFE copolymer (ETFE), Et/TFE/HFP copolymer (EFEP), etc.; and Et/CTFE copolymer (ECTFE), among others. Here, the TFE series polymers are polymers obtainable by polymerization of monomer components including TFE, and do not include the VdF series polymers.

The fluorine-containing polymer may comprise one that is obtainable by polymerizing, together with comonomers essential to the above-mentioned copolymers, one or more other comonomers (minor comonomers) in a minor proportion such as the above-mentioned fluorine-containing monomers; non-fluorine-containing vinyl monomers such as Et, Pr, etc.; and monomers having cyclic structures. The cyclic structure includes but is not limited to cyclic ether structures such as cyclic acetal structures, preferably such that at least two carbon atoms constituting a cyclic ether structure are part of the main chain of the fluorine-containing polymer.

The fluorine-containing polymer obtainable by copolymerizing a minor proportion of comonomers in addition to comonomers essential to the above-mentioned copolymers includes but is not limited to one obtainable by copolymerizing a minor proportion of PAVE, such as PPVE, and/or the monomer represented by the above general formula (i).

The comonomer to be copolymerized as a minor comonomer is preferably in a proportion of not more than 5 mass % based on the total amount of the monomer component. If the proportion exceeds 5 mass %, the objective copolymer characteristics may not be expressed.

The above fluorine-containing polymer is preferably one obtainable by polymerizing the monomer component substantially not containing perfluoro(vinyl ether) (PFVE). In this specification, the term "substantially not containing PFVE" means that PFVE accounts for less than 1 mass % based on the total amount of the above monomer component. The above PFVE is preferably less than 0.1 mass % and more preferably less than 0.05 mass % based on the total amount of the above monomer component.

From the standpoint of meltability, elasticity and application, etc., the above-mentioned fluorine-containing polymer may be a melt-moldable fluororesin such as ETFE, ECTFE, EFEP, PVdF, THV, VT or the like.

The fluorine-containing polymers can be used independently or in combination.

The fluorine-containing polymer is preferably the TFE series polymer, ECTFE, or a VdF series polymer which is a resin, more preferably the TFE series polymer, still more preferably EFEP.

Though it depends on the end use, the fluorine-containing polymer may contain TFE as a monomer component for improving the moldability of the low-temperature-decomposable engineering plastic resin composition of the invention, and is preferably a polymer containing TFE as a monomer component that is a resin. The above fluorine-containing polymer is more preferably one obtainable by polymerizing a monomer component comprising TFE and HFP. The above fluorine-containing polymer, provided that it is one obtainable by polymerizing monomer component comprising TFE and HFP, may be one obtainable by polymerizing other comonomer(s) such as the fluorine-containing monomers other than TFE or HFP; non-fluorine-containing vinyl monomers; and monomers having cyclic structures.

The fluorine-containing polymer has, at the terminus of the main chain or in a side chain, a few polar functional groups that may be reactive to the above low-temperature-decomposable engineering plastics. The polar functional group that is reactive to low-temperature-decomposable engineering plastics is not particularly limited and includes polar functional groups such as -COF, -COOM, $-SO_3M$, $-OSO_3M$ and $-CH_2OH$. In the above formulae, M represents a hydrogen atom, a metal cation or a quaternary ammonium ion. More preferably, the fluorine-containing polymer has substantially no polar functional group that is reactive to low-temperature-decomposable engineering plastics.

As used herein, the term "having substantially no polar functional group" means that any such polar functional group, if present at the terminus of the main chain or in a side chain, is present only in a small number of an order not enabling it to express its inherent function and not being involved in the reaction with low-temperature-decomposable engineering plastics. The number of such polar functional groups present per $10^6$ carbon atoms in the fluorine-containing polymer is not more than 50, preferably not more than 30, and more preferably not more than 10.

Because of the very fact that the fluorine-containing polymer substantially does not have the polar functional group reactive to low-temperature-decomposable engineering plastics, the hydrolysis or other reaction of the low-temperature-decomposable engineering plastic in preparing the low-temperature-decomposable engineering plastic resin composition of the invention or in the course of molding, which will be described below, can be inhibited, as well as the generation of the decomposed portions can be inhibited. As a result, the obtained shaped articles can be prevented from turning into yellow as well as the moldability can be stabilized, and the inherent characteristics of the low-temperature-decomposable engineering plastic can be fully exploited.

Since the fluorine-containing polymer substantially does not have polar functional groups, this fluorine-containing polymer reduces the friction of the low-temperature-decomposable engineering plastic with the surfaces of the die and screw, the internal wall of the barrel, etc. of an extruder, for instance, thus not inhibiting a lubricating property. Hence, the fluorine-containing polymer can realize reductions in extrusion pressure, extrusion torque and the variation of these parameters, consequently facilitating molding-processability of the low-temperature-decomposable engineering plastic resin composition of the invention.

The mechanism of this reduction of friction is not fully clear but is considered to be as follows. Within a molding machine, the low-temperature-decomposable engineering plastic has in many cases polar moieties such as amide bonds in the main chain structure thereof, and such low-temperature-decomposable engineering plastics are highly adhesive to metal or metal oxide members which are at the surfaces of part of the molding machine, such as a die, screw and barrel, for instance. However, because the fluorine-containing polymer having very low adhesivity in the main chain structure and substantially not having the polar functional group of the type described above is interposed between the low-temperature-decomposable engineering plastic and the metal or the like members, the adhesion between the low-temperature-decomposable engineering plastic resin composition and molding machine is reduced.

While the fluorine-containing polymer substantially does not have polar functional groups, it is present on the metal or metal oxide members of the internal surfaces of the molding machine to exhibit a lubricating effect on the flow of the low-temperature-decomposable engineering plastic throughout molding. It is by surface tension that the fluorine-containing polymer is present on the metal or metal oxide surface, and it is considered attributable to the force of one component of a phase separation system to diminish the interface with the other component as much as possible. Therefore, provided that it is steadily supplied, the fluorine-containing polymer need not have polar functional groups of its own.

The number of such polar functional groups available in the fluorine-containing polymer can be determined, for example, by the method described in U.S. Patent 5,132,368. Thus, the absorbance of the film obtained by compression-molding of the fluorine-containing polymer may be determined with an infrared spectrophotometer. From this value of absorbance and the calibration factors (CF) determined by measuring model compounds containing the above polar functional groups, the number of end groups per $10^6$ carbon atoms in the fluorine-containing polymer can be calculated by means of the following equation.

$$\text{(the number of polar functional groups per } 10^6 \text{ carbon atoms)}$$

$$= \text{(absorbance)} \times \text{(CF)} \times \text{(thickness of polymer film)}^{-1}$$

Regarding the wavelength values ($\mu$m) of the polar functional groups and the corresponding calibration factors determined with model compounds, the following figures can be mentioned by way of example: -COF = 5.31 $\mu$m, 406;

-COOH = 5.52 µm, 335; and -COOCH$_3$ = 5.57 µm, 368.

The fluorine-containing polymer can be synthesized by polymerizing the monomer component by conventional polymerization techniques such as emulsion polymerization, suspension polymerization, solution polymerization, block polymerization, or gas-phase polymerization.

The polymerization reaction is optionally carried out in the presence of a chain transfer agent. The chain transfer agent mentioned above is not particularly limited but includes hydrocarbons such as isopentane, n-pentane, n-hexane, cyclohexane, etc.; alcohols such as methanol, ethanol, etc.; and halogenated hydrocarbons such as carbon tetrachloride, chloroform, methylene chloride, methyl chloride, etc.; although methanol is particularly preferred.

The chain transfer agent mentioned above may be used with advantage for insuring that the fluorine-containing polymer substantially will not have polar functional groups. Aside from the above method, the following alternative method can be mentioned. Thus, in the case of emulsion polymerization, a polymer terminating in the polar functional group is first obtained, but such polar functional groups can be eliminated by subjecting the polymer to water vapor treatment, for instance, to stabilize the chain ends. The above polar functional groups can be converted to, for example, -CF$_3$ or -CONH$_2$ by fluorine gas (F$_2$) treatment or ammonium treatment, or to -CF$_2$H by the above water vapor treatment or hydrogen treatment. Therefore, the above fluorine-containing polymer may have -CF$_3$, -CONH$_2$, -CF$_2$H and the like. The above -CF$_3$, -CONH$_2$, -CF$_2$H and the like are different from the above polar functional group. In suspension polymerization, a polymer substantially not having polar functional groups can be obtained without resort to such treatment.

The melting point of said fluorine-containing polymer is not particularly limited, but is preferably a temperature not higher than a processing temperature of the low-temperature-decomposable engineering plastic to be used and more preferably a temperature not higher than the melting point of the low-temperature-decomposable engineering plastic to be used. This is because the polymer preferably has already been melted when the low-temperature-decomposable engineering plastic to be used melts in a molding machine.

The low-temperature-decomposable engineering plastic formulated together with the fluorine-containing polymer in the low-temperature-decomposable engineering plastic resin composition of the invention is usually a substance having excellent heat resistance, high strength and high dimensional stability and which can be used as a substitute for metal in some instances, thus including various resins which can be used as materials for machines, machine component parts, electrical/electronic parts, etc., which are required to have good mechanical and other dynamic properties.

In the present specification, the above low-temperature-decomposable engineering plastic is a high performance plastic which is applicable as the materials for construction or for machineries, is mainly for industrial use, and does not include one for fiber use.

The engineering plastic generally has a heat resistance value of not less than 100°C, a tensile strength of not less than 49 MPa (5 kgf·mm$^{-2}$), and a flexural modulus of not less than 2 GPa (200 kgf·mm$^{-2}$). Materials devoid of such characteristics cannot be used with advantage in the ordinary uses for engineering plastics, where mechanical strength at high temperature is required. As the engineering plastic, one having the flexural modulus of not less than 2.4 GPa (240 kgf·mm$^{-2}$) is preferably used.

The "heat resistance value of not less than 100°C" means that the melting point in case of a crystalline resin, or glass transition point in case of a non-crystalline resin, is not less than 100°C and that no attenuation of mechanical strength takes place at temperatures less than 100°C. Deflection Temperature Under Load (DTUL; ASTM D 648) is generally used as the indicator of the above heat resistance value. The above DTUL is the temperature that a test bar, which is prepared from the resin to be examined and has been heated under the load of 1.82 MPa or 0.45 MPa, starts deforming. The engineering plastic generally has a heat resistance value of not less than 150°C, including those species called special engineering plastics or super engineering plastics.

The tensile strength mentioned above is the maximum tensile stress at break, and is the value found by dividing the maximum load by the initial sectional area of the testpiece. In this specification, the tensile strength is a value determined by the method directed in ASTM D 638-00 (2000). The engineering plastic generally has a tensile strength within the range of 49 to 200 MPa in terms of the value as determined for the raw, unreinforced resin material with the standard composition.

The flexural modulus mentioned above is the modulus calculated from the load-deflection curve constructed for a testpiece in 3-point and 4-point bending tests. In the context of this specification, flexural modulus is a value determined by the method directed in ASTM D 790-00 (2000). The engineering plastic generally has a flexural modulus in the range of 2 to 7 GPa as determined for a raw, unreinforced resin material with the standard composition. As the above flexural modulus, more preferred lower limit is 2.4 GPa.

The low-temperature-decomposable engineering plastic resin composition of the invention is used for the melt-molding described hereinafter and, as such, is naturally a thermoplastic resin.

As to the low-temperature-decomposable engineering plastic resin composition of the invention, the low-temperature-decomposable engineering plastic is one having a melting point of not higher than 200°C and a decomposition temperature of not higher than 300°C, among the engineering plastics mentioned above. The melting point of the low-temperature-decomposable engineering plastic is more preferably 190°C as for the upper limit. The decomposition temperature of the low-temperature-decomposable engineering plastic is more preferably 250°C as for the upper limit.

The above low-temperature-decomposable engineering plastic has a resin temperature at molding preferably of 150 to 250°C. The above resin temperature is more preferably 170°C, still more preferably 180°C both as for the lower limit, and more preferably 240°C, still more preferably 230°C both as for the upper limit.

The low-temperature-decomposable engineering plastic is generally a plastic, for example, polyacetal, obtainable by the polymerization of carbonyl groups such as formaldehyde, etc. The polyacetal mentioned above includes, for example, homopolymers obtainable by polymerization using formaldehyde as a starting material with various catalysts, copolymers obtainable by, during ring-opening polymerization of trioxane which is a trimer of formaldehyde, adding a cyclic ether and the like other than trioxane and carrying out the polymerization, and the like. The above polyacetal includes, for example, polyoxymethylene (POM). The above polyacetal, when it comprises a homopolymer, is, compare to one comprising a copolymer, high in crystallizability and has high melting point, but is low in thermal stability and is more inclined to low-temperature-decomposable property.

The above low-temperature-decomposable engineering plastic is preferably one having a self-lubrication. The above low-temperature-decomposable engineering plastic, when it has the self-lubrication, is usually excellent in lubricating property under the light load, however, this property is generally considered to be expressed resulting from the fact that the polymer chain having been formed from the main chain and atoms bound thereto has little roughness in the surface and is one able to render the static friction coefficient and dynamical friction coefficient to be low.

The low-temperature-decomposable engineering plastic is not particularly restricted provided that it has the melting point or, in case of a non-crystalline resin, glass transition temperature as well as the decomposition temperature of the above-mentioned value each, and includes, for example, low-temperature-decomposable engineering plastics comprising a polymer not having phenylene groups in the backbone chain. As such includes, for example, homopolymers or copolymers of polyacetals obtainable using formaldehyde as a starting material, and the like.

The above low-temperature-decomposable engineering plastic can be used independently or in a combination of two or more species.

Depending on their kinds, the low-temperature-decomposable engineering plastics can each be synthesized by known techniques.

As to the low-temperature-decomposable engineering plastic resin composition of the present invention, the fluorine-containing resin accounts for preferably 0.005 to 1 mass % of the total of a mass of the low-temperature-decomposable engineering plastic and a mass of the fluorine-containing resin. When the fluorine-containing resin is less than 0.005 mass %, reductions in extrusion pressure and extrusion torque are insufficient, while when the fluorine-containing resin exceeds 1 mass %, the shaped article thus obtained may develop opacity or white turbidity. Moreover, the effect of the fluorine-containing resin is not commensurate with an excessively increased amount, thus leading to economic disadvantage. The preferred lower limit is 0.01 mass % and the preferred upper limit is 0.5 mass % of the total of the mass of the low-temperature-decomposable engineering plastic and the mass of the fluorine-containing resin.

The combination of the fluorine-containing resin and the low-temperature-decomposable engineering plastic preferably includes fluorine-containing resin comprising the fluorine-containing polymer obtainable by polymerizing the monomer component comprising TFE and HFP, as mentioned above, with polyacetal. Among them, from viewpoints that the moldability can be stabilized and the obtained shaped article can be prevented from turning into yellow, more preferred combination is EFEP with polyacetal. As mentioned above, one obtainable from copolymerizing minor proportion of PAVE such as PPVE and/or a monomer represented by the above general formula (i) may be used. Polyacetals are resins easily decomposable and highly reactive and have hitherto been difficult to be molded stably. However, the low-temperature-decomposable engineering plastic resin composition of the invention can be molded stably by using the above fluorine-containing resin formulated therein, even when the above low-temperature-decomposable engineering plastic is polyacetals, and can prevent the obtained shaped article from turning into yellow.

The low-temperature-decomposable engineering plastic resin composition of the invention may have other components in addition to the fluorine-containing resin and the low-temperature-decomposable engineering plastic. Such other components are not particularly limited but may be a reinforcing material such as a whisker, for example potassium titanate, glass fiber, asbestos fiber, carbon fiber, other high-strength fiber, glass powder, etc.; stabilizer such as mineral, flakes, etc.; lubricating agent such as silicone oil, molybdenum disulfide, etc.; pigment; conductive agent such as carbon black; impact resistance improving agent such as rubber; and/or other additives.

The method of producing the low-temperature-decomposable engineering plastic resin composition of the invention is a method which comprises producing the above low-temperature-decomposable engineering plastic resin composition by formulating the low-temperature-decomposable engineering plastic resin composition with the fluorine-containing resin.

The method of preparing the low-temperature-decomposable engineering plastic resin composition of the invention is not particularly limited but includes hitherto-known methods. A typical method comprises formulating the fluorine-containing resin and the low-temperature-decomposable engineering plastic in the formulating ratio mentioned above, optionally adding the other components, and melt-kneading the mixture optionally under heating.

In the formulating step, the other components may be blended with the fluorine-containing resin and/or the low-temperature-decomposable engineering plastic in advance, or added at the time of mixing the fluorine-containing resin and the low-temperature-decomposable engineering plastic.

The above fluorine-containing resin and low-temperature-decomposable engineering plastic should exist in a ratio within the above-mentioned range at the time when the low-temperature-decomposable engineering plastic resin composition is molded at the latest. Therefore, the formulating method includes but is not limited to a method which comprises blending the fluorine-containing resin with the low-temperature-decomposable engineering plastic in a ratio within the above-mentioned range from the beginning. Another typical formulating method is a serial method which comprises formulating the fluorine-containing resin, low-temperature-decomposable engineering plastic and optional other components to prepare a composition (1) in which the proportion of the fluorine-containing resin is higher than the range mentioned above, and then supplementing this composition (1) with a further amount of the low-temperature-decomposable engineering plastic before or at the molding stage so as to give a composition (2) in which the ratio of the low-temperature-decomposable engineering plastic to the fluorine-containing resin falls within the above-defined range.

Regarding the latter serial method, the composition (1) is sometimes called a master batch and the fluorine-containing resin in the composition (1) is preferably more than 0.005 mass % and not more than 20 mass %, more preferred lower limit is 1 mass %, still more preferred lower limit is 2 mass %, more preferred upper limit is 10 mass % of the total of the mass of the low-temperature-decomposable engineering plastic and the mass of the fluorine-containing resin. The above composition (2) is sometimes called "a premix".

The blending method is not particularly limited but, for example, a mixer such as a mill which is commonly used for production of resin compositions, such as molding compositions, can be used under conventional operating conditions. Here, when particles of the fluorine-containing resin are uniformly dispersed between and among particles of the low-temperature-decomposable engineering plastic, the molding processability of the resulting low-temperature-decomposable engineering plastic resin composition of the invention tends to be improved more prominently through reductions in extrusion torque and extrusion pressure, among other effects. Therefore, sufficient blending of the components is preferred, such that the particles of the fluorine-containing resin are almost uniformly adhered to the surface of each particle of the low-temperature-decomposable engineering plastic.

The term "formulating" as used herein means blending the low-temperature-decomposable engineering plastic and the fluorine-containing resin or preparing a master batch prior to preparation of a premix. The formulating may be conducted by melting the low-temperature-decomposable engineering plastic and/or the fluorine-containing resin (melt-kneading), or by blending these materials with a mill and the like without melting. The low-temperature-decomposable engineering plastic and the fluorine-containing resin may independently be in the form of pellets, granules or a powder. It is preferable, however, so as to allow the fluorine-containing resin to be present efficiently and uniformly on the surface of the (pellets of the) low-temperature-decomposable engineering plastic, the low-temperature-decomposable engineering plastic is in the form of pellets, and the fluorine-containing resin is in the form of powder. In this case, blending is preferably conducted without melting the low-temperature-decomposable engineering plastic and the fluorine-containing resin.

The above-described preferred formulating allows the fluorine-containing resin to be present at the interface between the low-temperature-decomposable engineering plastic and molding machine more efficiently than formulating by melt-kneading or blending the low-temperature-decomposable engineering plastic and the fluorine-containing resin both in the form of a powder without melting, or blending the low-temperature-decomposable engineering plastic and the fluorine-containing resin both in the form of pellets without melting.

The low-temperature-decomposable engineering plastic and the fluorine-containing resin may be of any desired form, for example, powders, granules or pellets. Typically, the low-temperature-decomposable engineering plastic may be in the form of pellets, and the fluorine-containing resin may be in the form of pellets or a powder. The fluorine-containing resin is preferably in the form of a powder because it is easy to mix sufficiently and uniformly.

As a result, in the molding of the low-temperature-decomposable engineering plastic resin composition of the invention, it is considered that particularly in the stage where the low-temperature-decomposable engineering plastic resin composition begins to melt down to the stage where the molten mass is molded, particles of the fluorine-containing resin adhering to the surface of particles of the low-temperature-decomposable engineering plastic are present in large number on the internal surface of the machine in contact with the low-temperature-decomposable engineering plastic resin composition. Thus, a sufficient lubrication effect is expressed to enable the low-temperature-decomposable engineering plastic resin composition to travel smoothly within the molding machine. As a result, it is also considered that favorable effects on processability such as drastic reductions in extrusion torque and extrusion pressure are realized.

The internal surface of the machine with which the low-temperature-decomposable engineering plastic resin composition contacts as mentioned above is, taking an extruder as an example, the surfaces of the screw in the melt-extrusion zone, the barrel surrounding and housing the screw, and the die at the extruder tip.

After or along with the blending, the composition may be melted by heating and kneading. Generally, this heating is preferably carried out at a temperature at or higher than the melting point of the low-temperature-decomposable engineering plastic so that while the low-temperature-decomposable engineering plastic is held in a molten condition, particles of the fluorine-containing resin may be uniformly dispersed in the melt.

In the pellets available on cooling after the above melt-kneading operation, the fluorine-containing resin is present not only on the pellet surface but also within the pellet according to its concentration. Therefore, it is considered that in the course of molding the low-temperature-decomposable engineering plastic resin composition of the invention, particularly after initiation of melting of the pellets or the like, the fluorine-containing resin migrates out from inside of the pellet to reduce interactions between molecules of the low-temperature-decomposable engineering plastic and between segments of the molecule and thereby prevents blocking, thus facilitating the transport of the low-temperature-decomposable engineering plastic and hence the low-temperature-decomposable engineering plastic resin composition comprising the low-temperature-decomposable engineering plastic through the extruder. Accordingly, the extrusion torque and extrusion pressure are reduced as a consequence, thus contributing to improved molding processability.

The low-temperature-decomposable engineering plastic resin composition of the invention, particularly when it is a powdery blend, may be subjected to size selection, where necessary.

The low-temperature-decomposable engineering plastic resin composition of the invention may be of any desired form, for example, a powder, granules or pellets.

The low-temperature-decomposable engineering plastic resin composition of the invention, thus obtained, can be used as a molding material.

The method of producing the low-temperature-decomposable engineering plastic shaped article comprises producing the shaped article by melting and molding the low-temperature-decomposable engineering plastic resin composition.

The method of producing a low-temperature-decomposable engineering plastic shaped article according to the present invention employs the above described low-temperature-decomposable engineering plastic resin composition. In this specification, the term "the method of producing a low-temperature-decomposable engineering plastic shaped article" is sometimes simply called as "the method of producing a shaped article", in the following.

The method of producing a shaped article comprises charging a molding machine, such as a screw extruder, with the low-temperature-decomposable engineering plastic resin composition. The production procedure after feeding to a molding machine is not particularly limited insofar as it is heat-melt molding. Thus, for example, a conventional process can be used which comprises heating the low-temperature-decomposable engineering plastic resin composition fed to a screw extruder or the like molding machine as above to a predetermined molding temperature, with pressure applied where necessary, and molding such as extrusion of the melted low-temperature-decomposable engineering plastic resin composition to the die of the molding machine or injection thereof to the metal mold to obtain an article of the desired shape.

In the above method of producing a shaped article, the low-temperature-decomposable engineering plastic resin composition of the invention is melted in the heating zone within the molding machine and molded as it departs from the heating zone and enters into the cooling zone. In this process, the low-temperature-decomposable engineering plastic resin composition of the invention is conducive to stable transport of the melt from the heating zone to the cooling zone, thus contributing to improved molding processability.

In the low-temperature-decomposable engineering plastic resin composition of the invention, as mentioned above, the particles comprising the fluorine-containing resin adhere to the surface of pellets, for example, of the low-temperature-decomposable engineering plastic almost uniformly. Therefore, it may be considered that the particles melt at the same time as or preceding to the melting of the low-temperature-decomposable engineering plastic by heating in the molding machine. The fluorine-containing resin, as mentioned above, tends to melt before the low-temperature-decomposable engineering plastic with higher probability, in the case that the resin is in the form of a powder and/or has a melting point lower than that of the low-temperature-decomposable engineering plastic. Therefore, the fluorine-containing resin can exhibit its lubrication effect sufficiently in the molding machine.

The heating zone in the molding machine, taking an extruder as an example, typically is a melt-extrusion zone, which is usually equipped with a screw and a barrel, and is designed such that a resin composition in the barrel is heated by heaters disposed around the barrel.

The improved molding processability with an extruder, for instance, is attained as the extrusion torque and extrusion pressure are significantly reduced. Thus, depending on the formulation of the low-temperature-decomposable engineering plastic resin composition and the molding conditions, in extrusion molding, for instance, the extrusion torque can be reduced to 20 to 95% of the level prevailing in the event of omission of the fluorine-containing resin from the formulation. Also, the extrusion pressure can be reduced to 40 to 95% of the level prevailing in the absence of the fluorine-containing resin.

The above method of producing a shaped article is not particularly limited but includes extrusion molding, injection molding, blow molding, casting (with a metal mold), rotary molding, reactive molding and the like. Extrusion molding is preferred, however, so that the improved effect on molding processability may be more effectively expressed.

The above extrusion molding is a method in which the low-temperature-decomposable engineering plastic resin composition of the present invention heated in an extrusion machine to melt is extruded continuously from the die to mold the same. The above injection molding is a method in which the low-temperature-decomposable engineering plastic resin composition of the present invention heated and melted in an injection molding machine fills, under pressure, a metal mold closed in one end to mold the low-temperature-decomposable engineering plastic resin composition. In this specification, the blow molding is a method in which a parison prepared, in advance, from the heated and melted low-temperature-decomposable engineering plastic resin composition of the invention gets swollen in a metal mold using air pressure and the like, to be made cohere to the above metal mold and mold the same. The above reactive molding is a method in which compounding or molding is carried out using a molding machine having the function as a reactor, where a chemical reaction takes place, and includes, for example, reactive processing, reactive extrusion molding, and the like.

The various extruder operating parameters for use in the above method of producing a shaped article are not particularly limited but may be those conventionally used. The molding temperature is typically a temperature higher than the melting point of the low-temperature-decomposable engineering plastic. The molding temperature, when within the above-mentioned range, is typically a temperature below the lower of the decomposition temperature of the fluorine-containing resin and that of the low-temperature-decomposable engineering plastic. Such temperature includes, for example, 250 to 400°C. The molding temperature is sometimes referred to as the extrusion temperature in the case of extrusion molding.

The shaped article obtainable by the above method of producing a shaped article is not particularly limited but includes articles having various configurations or geometries, for example, various sheaths; sheets; films; rods; pipes; and the like.

The use of the shaped article is not particularly limited, but the invention can be applied with advantage to product fields particularly calling for critical mechanical and other dynamic properties and high heat resistance, depending on the kind of low-temperature-decomposable engineering plastic that is used. Thus, the shaped article includes but is not limited to space and other machines or devices; machine parts such as gears and cams; electric/electronic parts such as connectors, plugs, switches, enamels for conductor use, etc.; automobiles, aircraft and other vehicles and their component parts; decorative sheets; magnetic tapes, photographic film, gas separating membrane and other films; optical products such as lenses, compact disks, substrates for optical disks, safety goggles, etc.; beverage bottles and other food containers; various heat-resisting medical devices and supplies; and other industrial parts.

BEST MODE FOR CARRYING OUT THE INVENTION

The following examples are intended to describe the present invention in further detail and should by no means be construed as defining the scope of the invention. It should also be understood that the formulating amount (mass %) of the fluorine-containing resin is based on the total amount of the fluorine-containing resin and the low-temperature-decomposable engineering plastic combined.

Example of Synthesis-1

Synthesis of fluorine-containing resin

A 820-L glass-lined autoclave was charged with 200 L of pure water and, after the thorough nitrogen purging, vacuumed. 113 kg of 1-fluoro-1,1-dichloroethane, 95 kg of hexafluoropropylene (HFP) and 85 kg of cyclohexane were charged, 292 g of perfluoro(1,1,5-trihydro-1-pentene) (HF-Pe) was charged using nitrogen gas, and the system was maintained at 35°C and the stirring speed of 200 rpm. Thereafter, tetrafluoroethylene (TFE) was charged till 0.71 MPaG (7.25 kg/cm$^2$G) followed by ethylene till 0.78 MPaG (8 kg/cm$^2$G).

Methanol solution of di-n-propylperoxydicarbonate (50%, 1.9 kg) was charged to start the polymerization. The system was successively supplemented with the mixed gas of TFE:ethylene (Et):HFP (39.2:43.6:17.3 mole %) so as to the internal pressure of the autoclave was maintained at 0.78 MPaG. The stirring was continued for 32 hours with successive supplementation of perfluoro(1,1,5-trihydro-1-pentene). The pressure of the system was returned to the atmospheric pressure and the reactive product was washed with water and dried to give 95 kg of powder.

A 500-L stainless steel autoclave was charged with 95 kg of the obtained powder and 100 L of pure water, 7 kg of 28% ammonium water was added thereto and heated with stirring for 5 hours at 80°C. The content powder was taken out, washed with water and dried to give 93 kg of fluorine-containing resin. The TFE:Et:HFP:HF-Pe mole ratio of the copolymer as analyzed with $^{19}$F-NMR was 38.9:45.9:14.8:0.4. The melting point of the copolymer as measured by differential scanning calorimeter (DSC, manufactured by Seiko K.K.) was 171.8°C. Functional group content and melt flow rate of the copolymer obtained was measured as following method.

(Determination of polar functional group content)

A 0.1 mm-thick polymer film obtained by compression-molding the above fluorine-containing resin at 300°C was scanned with a FTIR spectrophotometer to determine the absorbance. The number of end groups per $10^6$ carbon atoms was calculated by means of the following equation.

$$\text{(the number of polar functional groups per 106 carbon atoms)}$$

$$= \text{(absorbance)} \times \text{(CF)} \times \text{(thickness of polymer film)}^{-1}$$

(Measurement of melt flow rate (MFR))

Using a melt indexer (Toyo Seiki Seisaku-syo Ltd.), the amount of polymer flew in a unit time (10 minutes) from a nozzle having a diameter of 2 mm and a length of 8 mm was measured. The result was 7.1 g/10 min.

Example 1

The fluorine-containing resin obtained by Example of Synthesis-1 was formulated, in a proportion of 0.25 mass %, with polyacetal (product name: Derlin 150SA, product of E. I. du Pont de Nemours and Company) and these materials were blended in a polyethylene bag and molded using an extrusion molding machine (type:uni-axial; screw size: φ 30 mm, LD: 25; round bar die: φ 30 mm, L 330mm; manufactured by Rikua) at a screw rotational speed of 6 to 7 rpm and an extrusion temperature of 200°C. The extrusion torque, extrusion pressure, and extrusion speed are shown in Table 1.

Comparative Example 1

Except that no fluorine-containing resin was added, the molding procedures described in Example 1 was otherwise faithfully repeated. The extrusion torque, extrusion pressure, and extrusion speed are shown in Table 1.

Table 1

| | unit | Ex. 1 | Comp. Ex. 1 |
|---|---|---|---|
| Fluorine-containing resin formulated amount | mass % | 0.25 | - |
| Screw speed | rpm | 6~7 | 3~4 |
| Extrusion torque | amp | 7.8 | 8.2 |
| Extrusion speed | m/h | 1 | 0.6 |

Example 2

The fluorine-containing resin obtained by Example of Synthesis-1 was supplied, in proportion of 3 mass %, using a vibratory constant feeder (manufactured by Kubota K.K.) and kneaded with polyacetal (product name: Derlin 150SA, product of E. I. du Pont de Nemours and Company) at a barrel temperature of 190 to 200°C to obtain pellets. The obtained pellets were formulated with polyacetal so as to the fluorine-containing resin accounted for 0.05 mass % and these materials were blended in a polyethylene bag and molded using a injection molding machine (type: Klockner F85; manufactured by Klockner Ferromatic, Inc.; metal mold: ASTM D 638 type 1 tensile testpiece type) at a barrel temperature of 190°C, metal mold temperature of 50°C and injection pressure of 110 to 115 MPa. The obtained shaped article was subjected to the tensile test as described below and appearance was observed. The results are shown in Fig. 2.

(Tensile test)

In accordance with ASTM D 638, the test was carried out using the universal testing machine (Instron 4302). The measurement conditions were such that speed of testing rate of stressing was 5 mm/min and the distance between chucks was 115 mm. The tensile elongation was calculated from the distance of which the crosshead moved.

Example 3

Except that the fluorine-containing resin was formulated in proportion of 0.10 mass %, the molding procedure of Example 2 was otherwise faithfully repeated. The results of tensile test and appearance are shown in Table 2.

Example 4

Except that the fluorine-containing resin was formulated in proportion of 0.25 mass %, the molding procedure of Example 2 was otherwise faithfully repeated. The results of tensile test and appearance are shown in Table 2.

Example 5

Except that the temperature of the metal mold of the injection molding machine was set to 120°C, the molding procedure of Example 2 was otherwise faithfully repeated. The results of tensile test and appearance are shown in Table 2.

Example 6

Except that the fluorine-containing resin was formulated in proportion of 0.10 mass % and the temperature of the metal mold of the injection molding machine was set to 120°C, the molding procedure of Example 2 was otherwise faithfully repeated. The results of tensile test and appearance are shown in Table 2.

Example 7

Except that the fluorine-containing resin was formulated in proportion of 0.25 mass % and the temperature of the metal mold of the injection molding machine was set to 120°C, the molding procedure of Example 2 was otherwise faithfully repeated. The results of tensile test and appearance are shown in Table 2.

Example 8

Except that the temperature of the barrel of the injection molding machine was set to 210°C, the molding procedure of Example 2 was otherwise faithfully repeated. The results of tensile test and appearance are shown in Table 2.

Example 9

Except that the fluorine-containing resin was formulated in proportion of 0.10 mass % and the temperature of the barrel of the injection molding machine was set to 210°C, the molding procedure of Example 2 was otherwise faithfully repeated. The results of tensile test and appearance are shown in Table 2.

Example 10

Except that the fluorine-containing resin was formulated in proportion of 0.25 mass % and the temperature of the barrel of the injection molding machine was set to 210°C, the molding procedure of Example 2 was otherwise faithfully repeated. The results of tensile test and appearance are shown in Table 2.

Example 11

Except that the temperatures of the barrel and the metal mold of the injection molding machine were set to 210°C and 120°C, respectively, the molding procedure of Example 2 was otherwise faithfully repeated. The results of tensile test and appearance are shown in Table 2.

Example 12

Except that the fluorine-containing resin was formulated in proportion of 0.10 mass % and the temperatures of the barrel and the metal mold of the injection molding machine were set to 210°C and 120°C, respectively, the molding procedure of Example 2 was otherwise faithfully repeated. The results of tensile test and appearance are shown in Table 2.

Example 13

Except that the fluorine-containing resin was formulated in proportion of 0.25 mass % and the temperatures of the barrel and the metal mold of the injection molding machine were set to 210°C and 120°C, respectively, the molding procedure of Example 2 was otherwise faithfully repeated. The results of tensile test and appearance are shown in Table 2.

Comparative Example 2

Except that no fluorine-containing resin was added, the molding procedure described in Example 1 was otherwise faithfully repeated. The results of tensile test and appearance are shown in Table 2.

Comparative Example 3

Except that no fluorine-containing resin was added and the temperature of the metal mold of the injection molding machine was set to 120°C, the molding procedure described in Example 1 was otherwise faithfully repeated. The results of tensile test and appearance are shown in Table 2.

Comparative Example 4

Except that no fluorine-containing resin was added and the temperature of the barrel of the injection molding machine was set to 210°C, the molding procedure described in Example 1 was otherwise faithfully repeated. The results of tensile test and appearance are shown in Table 2.

Comparative Example 5

Except that no fluorine-containing resin was added and the temperatures of the barrel and the metal mold of the injection molding machine were set to 210°C and 120°C, respectively, the molding procedure described in Example 1 was otherwise faithfully repeated. The results of tensile test and appearance are shown in Table 2.

Table 2

| | unit | Ex. | | | | | | | | | | | | Comp. Ex. | | | |
|---|---|---|---|---|---|---|---|---|---|---|---|---|---|---|---|---|---|
| | | 2 | 3 | 4 | 5 | 6 | 7 | 8 | 9 | 10 | 11 | 12 | 13 | 2 | 3 | 4 | 5 |
| Fluorine-containing resin formulated amount | mass % | 0.05 | 0.1 | 0.25 | 0.05 | 0.1 | 0.25 | 0.05 | 0.1 | 0.25 | 0.05 | 0.1 | 0.25 | - | - | - | - |
| Barrel temperature | °C | 190 | 190 | 190 | 190 | 190 | 190 | 210 | 210 | 210 | 210 | 210 | 210 | 190 | 190 | 210 | 210 |
| Metal die temperature | °C | 50 | 50 | 50 | 120 | 120 | 120 | 50 | 50 | 50 | 120 | 120 | 120 | 50 | 120 | 50 | 120 |
| Appearance* | | NRS AA | NRS AA | NRS AA | NB AA | NB AA | NB AA | NRS AA | NRS AA | NRS AA | NB FS | NB FS | NB FS | RS | B S | RS | B S |
| Pressure of hydraulic screw | bar | 100 | 95 | 95 | 100 | 95 | 95 | 95 | 90 | 85 | 95 | 90 | 85 | 120 | 120 | 100 | 95 |
| Yield strength | MPa | 66 | 66 | 67 | - | 69 | - | 66 | 66 | - | 69 | 69 | 69 | 66 | 70 | 66 | 69 |
| Yield strain | % | 15.7 | 17.7 | 17.8 | - | - | - | 17.3 | 17.8 | - | - | - | - | 14.6 | 20.7 | 16.7 | - |
| Modulus of elasticity | GPa | 3.0 | 3.0 | 3.0 | - | 3.4 | - | 3.0 | 2.9 | - | 3.5 | 3.4 | 3.4 | 3.0 | 3.3 | 3.0 | 3.3 |

*Abbreviations in "Appearance" column indicate followings:

NRS: Not rough surface
AA: Acceptable appearance
NB: No blister
FS: Few shrink marks
B: Blister appeared
S: Shrink marks appeared
RS: Rough surface (void, burning, flow mark, jetting, sharkskin, etc.)

It is clear from Table 1 and 2 that Examples formulated with the fluorine-containing resin were improved in extrusion speed. Also, Examples formulated with the fluorine-containing resin, when compared to Comparative Examples being added no fluorine-containing resin, was improved in appearance of the obtained shaped article. None of the Examples, in which the fluorine-containing resin substantially not having polar functional groups reactive to the low-temperature-decomposable engineering plastic was used, were turned yellow, indicative that no decomposed portion of the low-temperature decomposable engineering plastic was generated.

EFFECT OF THE INVENTION

The low-temperature-decomposable engineering plastic resin composition of the invention is prepared by formulating the fluorine-containing resin in a defined content range and, as such, is conducive to good and stable transport of the melt from the heating zone to the cooling zone of a molding machine, enabling stable production with improved yield and higher productivity of shaped articles and favoring industrial-scale production of low-temperature-decomposable engineering plastic products.

The mechanism of the low-temperature-decomposable engineering plastic resin composition in providing such favorable results is not fully clear but it seems chiefly attributable to the fact that, in the course of transport of the resin melt from the heating zone to the cooling zone, the fluorine-containing resin acts as a lubricant across the interface between the internal wall of the molding machine and the resin melt coming into contact therewith. The fluorine-containing resin in extrusion molding is considered to exert such a lubricating action on surfaces of a revolving screw and a surrounding extruder barrel.

The fluorine-containing resin exhibiting such a lubricating action may be a molten entity such as EFEP in the melt and the molding temperature is selected to be higher than the melting point of EFEP; or a non-molten entity such as EFEP in the melt and a molding temperature is selected to be lower than the melting-start point of EFEP. When the fluorine-containing resin is one which is in a molten state at the molding temperature, it is preferably a polymer not compatible with the low-temperature-decomposable engineering plastic so that the above lubricating action may be effectively expressed.

With the low-temperature-decomposable engineering plastic resin composition of the invention, it is often unnecessary to make a critical selection in regard to the relationship of melting point to molding temperature, for instance, with the result that the fluorine-containing resin can be selected from among a broad variety of polymers, thus broadening the freedom of choice for materials.

The lubricating action of the low-temperature-decomposable engineering plastic resin composition of the invention can be obtained by formulating the fluorine-containing resin in a small amount within the above-mentioned range. Thus, the low-temperature-decomposable engineering plastic resin composition of the invention is of great industrial value in that it helps to improve the moldability of low-temperature-decomposable engineering plastics on a high production scale in a simple manner. Also, despite the generally high cost of the fluorine-containing resin, the expected effect can be obtained with a small amount of the polymer as mentioned above.

**Claims**

1. A low-temperature-decomposable engineering plastic resin composition prepared by formulating a low-temperature-decomposable engineering plastic with a fluorine-containing resin,
   wherein said low-temperature-decomposable engineering plastic has a melting point of not higher than 200°C and a decomposition temperature of not higher than 300°C, and
   wherein said fluorine-containing resin is a resin comprising a fluorine-containing polymer,
   said fluorine-containing polymer having a fluorine atom and at least one atom species selected from the group consisting of hydrogen atom, chlorine atom, bromine atom and iodine atom,
   said fluorine atom and said at least one atom species being bound to a non-terminal carbon atom constituting a main chain, and
   said fluorine-containing polymer having substantially no polar functional groups reactive to the low-temperature-decomposable engineering plastic.

2. The low-temperature-decomposable engineering plastic resin composition as claimed in claim 1,
   wherein the fluorine-containing polymer is one obtainable by polymerizing a monomer component comprising tetrafluoroethylene and hexafluoropropylene.

3. The low-temperature-decomposable engineering plastic resin composition as claimed in claim 2,
   wherein the fluorine-containing polymer is an ethylene/tetrafluoroethylene/hexafluoropropylene copolymer.

4.  The low-temperature-decomposable engineering plastic resin composition as claimed in claim 1, 2 or 3,
        wherein the fluorine-containing polymer is one obtainable by polymerizing a monomer component substantially not containing perfluoro(vinyl ether).

5.  The low-temperature-decomposable engineering plastic resin composition as claimed in claim 1, 2, 3 or 4,
        wherein the fluorine-containing polymer has a melting point of not higher than a processing temperature of the low-temperature-decomposable engineering plastic.

6.  The low-temperature-decomposable engineering plastic resin composition as claimed in claim 1, 2, 3, 4 or 5,
        wherein the low-temperature decomposable engineering plastic is a polyacetal.

7.  A method of producing the low-temperature-decomposable engineering plastic resin composition as claimed in claim 1, 2, 3, 4, 5 or 6,
        which comprises producing the low-temperature-decomposable engineering plastic resin composition by formulating the low-temperature-decomposable engineering plastic with the fluorine-containing resin.

8.  A method of producing a low-temperature-decomposable engineering plastic shaped article,
        which comprises producing the shaped article by melting and molding the low-temperature-decomposable engineering plastic resin composition as claimed in claim 1, 2, 3, 4, 5 or 6.

9.  The method of producing the low-temperature-decomposable engineering plastic shaped article as claimed in claim 8,
        wherein molding is carried out at a temperature not lower than a melting point of the low-temperature-decomposable engineering plastic.

10. The method of producing the low-temperature-decomposable engineering plastic shaped article as claimed in claim 8 or 9,
        wherein the fluorine-containing resin has a melting point of not higher than a processing temperature of the low-temperature-decomposable engineering plastic.

| | | |
|---|---|---|
| **INTERNATIONAL SEARCH REPORT** | International application No. | |
| | PCT/JP02/12147 | |

**A. CLASSIFICATION OF SUBJECT MATTER**
Int.Cl⁷ C08L59/00, 27/12, C08J5/00

According to International Patent Classification (IPC) or to both national classification and IPC

**B. FIELDS SEARCHED**

Minimum documentation searched (classification system followed by classification symbols)
Int.Cl⁷ C08L59/00, 27/12, C08J5/00

Documentation searched other than minimum documentation to the extent that such documents are included in the fields searched

Electronic data base consulted during the international search (name of data base and, where practicable, search terms used)
WPI/L(DIALOG)

**C. DOCUMENTS CONSIDERED TO BE RELEVANT**

| Category* | Citation of document, with indication, where appropriate, of the relevant passages | Relevant to claim No. |
|---|---|---|
| X | EP 0644209 A1 (HOECHST AG), 22 March, 1995 (22.03.95), Claims; page 1, lines 7 to 11, 30 to 38; pages 3 to 4, Beispiel 3 & US 5641571 A1 & JP 7-165828 A | 1-10 |
| X Y | JP 6-212080 A (NTN Corp.), 02 August, 1994 (02.08.94), Claims; Par. Nos. [0009], [0013], [0022]; example 5 (Family: none) | 1,2,4,6-9 3,5 |
| X Y | JP 8-253692 A (Hitachi Cable, Ltd.), 01 October, 1996 (01.10.96), Claims; Par. Nos. [0012] to [0013], [0026] to [0041] (Family: none) | 1,4,6-9 2,3,5,10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 February, 2003 (20.02.03) | 04 March, 2003 (04.03.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**INTERNATIONAL SEARCH REPORT**

| International application No. |
| --- |
| PCT/JP02/12147 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 63-213546 A  (Sanko Shoji Kabushiki Kaisha),<br>06 September, 1988 (06.09.88),<br>Claims; page 2, lower left column, lines 14 to 17;<br>lower right column, line 13 to page 3, upper left<br>column, line 12<br>(Family: none) | 1,4,6-9<br>2,3,5,10 |
| X<br>Y | JP 11-29691 A  (Oiles Corp.),<br>02 February, 1999 (02.02.99),<br>Claims<br>(Family: none) | 1,4,6-9<br>2,3,5,10 |
| X<br>Y | JP 10-237254 A  (Polyplastics Co., Ltd.),<br>08 September, 1998 (08.09.98),<br>Claims; Par. Nos. [0006] to [0007]<br>(Family: none) | 1,2,4-8,10<br>3,9 |
| Y | WO 00/69967 A1  (DYNEON LLC),<br>23 November, 2000 (23.11.00),<br>Claims; page 8, line 29 to page 9, line 2; page<br>10, lines 3 to 9<br>& JP 2002-544358 A | 1-10 |
| Y | EP 0162455 A2  (DAIKIN INDUSTRIES, LTD.),<br>27 November, 1985 (27.11.85),<br>Claims; page 4, lines 9 to 16<br>& JP 60-248710 A        & US 4677175 A1 | 1-10 |
| Y | EP 0773244 A1  (DAIKIN INDUSTRIES, LTD.),<br>14 May, 1997 (14.05.97),<br>Claims<br>& WO 96/013446 A1        & JP 8-34820 A | 1-10 |

Form PCT/ISA/210 (continuation of second sheet) (July 1998)